# EUROPÄISCHE PATENTANMELDUNG

(11) **EP 2 157 530 A1**
(43) Veröffentlichungstag der Anmeldung: **24.02.2010**
(21) Anmeldenummer: 09010773.1
(22) Anmeldetag: 21.08.2009
(51) Int. Cl.: G06K 9/00, G06K 9/03, G06K 9/22

(54) **Verfahren zum Feststellen der Richtigkeit handgeschriebener Wörter, Zahlen, Rechenaufgaben und anderer Terme in Echtzeit und Vorrichtung zur Durchführung des Verfahrens**

(30) Priorität: 21.08.2008 DE 102008039084
(71) Anmelder: Brendes Datentechnik GmbH, 26160 Bad Zwischenahn (DE)
(72) Erfinder: Brendes, Martin, Dr., 26160 Bad Zwischenahn (DE)
(74) Vertreter: Jabbusch, Matthias

(57) **Zusammenfassung**

Bei einem Verfahren zum Feststellen der Richtigkeit handgeschriebener Wörter, Zahlen, Rechenaufgaben und anderer Terme in Echtzeit, während des Schreibens auf Papier oder einer ähnlichen Unterlage, ist vorgesehen, dass ein Schreibgerät verwendet wird, dessen Bewegungen über die Schreibunterlage aufgenommen werden, dass anschließend die aufgenommenen Bewegungen in einer Datenverarbeitungsanlage in Wörter, Zahlen, Rechenaufgaben und andere Terme umgesetzt werden, mit in der Datenverarbeitungsanlage abgelegten Mustern verglichen werden und bei Abweichungen ein Signal generiert wird.

Eine Vorrichtung zum Feststellen der Richtigkeit handgeschriebener Wörter, Zahlen, Rechenaufgaben und anderer Therme in Echtzeit, während des Schreibens auf Papier oder einer ähnlichen Unterlage, vorzugsweise zur Durchführung des vorgenannten Verfahrens, umfassend wenigstens ein Schreibgerät, ist **dadurch gekennzeichnet, dass** in das Schreibgerät ein Sender eingesetzt ist und dass weiterhin ein Empfänger vorgesehen ist, welcher Signale des Senders aufnimmt und an eine Datenverarbeitungsanlage weiterleitet.

## Beschreibung

Die Erfindung betrifft ein Verfahren zum Feststellen der Richtigkeit handgeschriebener Wörter, Zahlen, Rechenaufgaben und anderer Terme in Echtzeit, während des Schreibens auf Papier oder einer ähnlichen Unterlage.

Wörter, Zahlen, Rechenaufgaben und andere Terme dienen der Verständigung von Menschen auf schriftlichem Wege. In der Schule wird Kindern beigebracht, diese Terme nach den jeweiligen orthografischen Regeln eines Landes richtig zu schreiben. Trotz des Beibringens der Regeln in der Schule kommen Fehler vor. Diese können aus der Unkenntnis orthografischer Regeln entstehen oder auch durch Verschreibungen aufgrund von Unkonzentriertheiten.

Für in Datenverarbeitungsanlagen geschriebene Texte sind gattungsgemäße Verfahren bekannt. In Bürosoftware geschriebene Texte können mit einer in die Bürosoftware eingebauten Rechtschreibkontrolle überprüft werden. Falsch geschriebene Wörter werden angezeigt, sie können dann entweder automatisch oder manuell verbessert werden. Bei dieser Kontrolle handelt es sich allerdings um eine Rechtschreibkontrolle von bereits fertig geschriebenen Texten.

Das oben angegebene Verfahren soll jedoch das Feststellen der Richtigkeit auf Papier handgeschriebener Wörter in Echtzeit betreffen. Handgeschriebene Texte können von einem Verfasser nur selbst überprüft werden, es ist allenfalls möglich, den handgeschriebenen Text anschließend noch einmal durchzulesen oder von einem Dritten durchlesen zu lassen. Auch bei Rechenaufgaben ist eine Kontrolle durch einen Dritten erforderlich, beispielsweise durch einen Elternteil oder einen Lehrer während des Mathematikunterrichtes oder während der Anfertigung der Hausaufgaben.

Der Erfindung liegt die Aufgabe zu Grunde, ein Verfahren der eingangs genannten Gattung aufzuzeigen, das ohne dritte Personen mit maschineller Unterstützung vorzugweise mobil durchführbar ist.

Verfahrensseitig ist diese Aufgabe erfindungsgemäß dadurch gelöst, daß ein Schreibgerät verwendet wird, dessen Bewegungen über die Schreibunterlage aufgenommen werden, dass anschließend die aufgenommene Bewegungen in eine Datenverarbeitungsanlage in Wörter, Zahlen, Rechenaufgaben und andere Terme umgesetzt werden, mit in der Datenverarbeitungsanlage abgelegten Mustern verglichen werden und bei Abweichungen ein Signal generiert wird.

Bei dem erfindungsgemäßen Verfahren wird die Schreibarbeit überwacht. Dazu werden die Bewegungen des Schreibgerätes über die Schreibunterlage aufgenommen. Die aufgenommenen Bewegungen werden mit Hilfe einer Software in einer Datenverarbeitungsanlage in die Wörter, Zahlen, Rechenaufgaben und andere Terme umgesetzt, die mit dem Schreibgerät auf die Schreibunterlage geschrieben wurden. Es erfolgt somit eine Online-Übertragung der handgeschriebenen Zeichen in die Datenverarbeitungsanlage. In der Datenverarbeitungsanlage selbst können dann in entsprechend großen Speicherressourcen die verschiedenen handgeschriebenen Muster beispielsweise aller Buchstaben, Zahlen, Sonderzeichen und sonstiger Terme abgespeichert sein, zu handgeschriebenen Wörtern ein Lexikon vorhanden sein, so daß durch einen Vergleich der aufgenommenen Wörter, Zahlen, Rechenaufgaben und Terme mit den in der Datenverarbeitungsanlage abgelegten Mustern in Echtzeit erkannt werden kann, ob das Wort richtig geschrieben ist oder nicht. Wird beispielsweise statt des Wortes "Haus" das Wort "Hasu" geschrieben, so wird über die veränderte Führung des Schreibgerätes am Wortende eine Abweichung gegenüber dem Muster "Haus" in der Datenverarbeitungsanlage festgestellt und ein Signal ausgegeben.

Auch bei einer Rechenaufgabe ist eine entsprechende Signalgenerierung notwendig. Wird mit dem überwachten Schreibgerät z.B. geschrieben 2 + 2 = 5, so wird wiederum ein Signal aufgegeben, da die beiden Seiten des Gleichheitszeichens verschieden groß sind und somit diese Gleichung nicht erfüllt ist.

Die Schreibunterlage wird für dieses Verfahren als X-Y-Koordinatensystem angesehen und Bewegungen des Stiftes werden in X- und Y-Richtungen ausgemessen. Alle Buchstaben, Zahlen und andere Therme können durch Ausmessungen in der X- und Y-Ebene gekennzeichnet werden, da sämtliche Terme auf die Schreibunterlage in ein zweidimensionales Koordinatensystem eingetragen werden. Die Schreibunterlage ist dieses Koordinatensystem, die Führung des überwachten Schreibgerätes in diesem Koordinatensystem wird in X- und Y-Bewegungen oder Mischbewegungen aus beiden Bewegungen zerlegt und entsprechend erfindungsgemäß abgearbeitet.

Wird ein falsches Wort oder eine falsche Rechenaufgabe erkannt, kann eine entsprechende optische Signalisierung erfolgen. Die Signalisierung ist auch auf andere Weise beispielsweise auf akustische Weise möglich. Dazu kann mit dem Stift noch einmal eine geschriebene Zeile angetippt werden, um eine Überprüfung durch die Datenverarbeitungsanlage auszulösen.

Zur vorrichtungsseitigen Lösung der Aufgabe ist vorgesehen, dass in das Schreibgerät ein Sender eingesetzt ist und dass weiterhin wenigstens ein Empfänger vorgesehen ist, welcher Signale des Senders aufnimmt und an eine Datenverarbeitungsanlage weiterleitet.

Durch die Aufnahme eines Senders im Schreibgerät ist die Bewegung des Schreibgerätes überwachbar. Der Sender kann fortlaufend Signale abgegeben, über eine geeignete Aufnahme dieser Signale ist die jeweilige Position des Schreibgerätes feststellbar. Für die Überwachung ist wenigstens ein Empfänger vorgesehen, der mehrere Empfangsbausteine aufweisen kann. Die Signale des Senders werden aufgenommen und an eine Datenverarbeitungsanlage weitergeleitet. Dort werden aus den Bewegungen des Schreibgerätes die geschriebenen Wörter, Zahlen oder anderen Terme generiert und mit den in der Datenverarbeitungsanlage abgelegten Mustern verglichen.

Der Empfänger umfasst vorzugsweise eine Digitalisierungseinrichtung. Aufgenommene analoge Signale werden digitalisiert, um sie zu standardisieren und in einfacher Weise digital weiterverarbeiten zu können.

Die digitalisierten Signale werden anschließend in einer Zeichenerkennung verarbeitet. Die Zeichenerkennung ist mit einer Fehlererkennung verschaltet, wobei die Fehlererkennung auf einen Regelspeicher zurückgreift.

Die Datenverarbeitungsanlage hat eine akustische und/oder optische Anzeige zur Ausgabe eines bei Abweichungen generierten Signals. Wird ein falsches Schreibmuster festgestellt, dass von dem in der Datenverarbeitungsanlage hinterlegten Muster verschieden ist, wird auf Fehler erkannt und ein Signal ausgegeben.

Zur weiteren Ausbildung der Erfindung kann schließlich vorgesehen sein, dass die Datenverarbeitungsanlage durch eine elektronische Schaltung ausgebildet ist. Diese weist die notwendigen Rechnerarchitekturen und Speicherbausteine für die Durchführung des Verfahrens auf. Vorzugsweise ist die Datenverarbeitungsanlage in einem kompakten und mobilen Gehäuse angeordnet, so dass sie für Schreibarbeiten an verschiedenen Orten mitgeführt werden kann. Unter Umständen kann sie direkt an einem Klemmbrett für ein DINA4-Blatt befestigt werden und die auf dem DIN A4-Blatt vorgenommen Schreibübungen überwachen.

Ein Ausführungsbeispiel der Erfindung, aus dem sich weitere erfinderische Merkmale ergeben, ist in der Zeichnung dargestellt. Es zeigen:
- Fig. 1:: eine perspektivische Ansicht einer Vorrichtung zum Feststellen der Richtigkeit handgeschriebener Wörter, und
- Fig. 2:: eine schematische Ansicht der Bauelemente eines Bauteils der Vorrichtung gemäß Fig. 1.

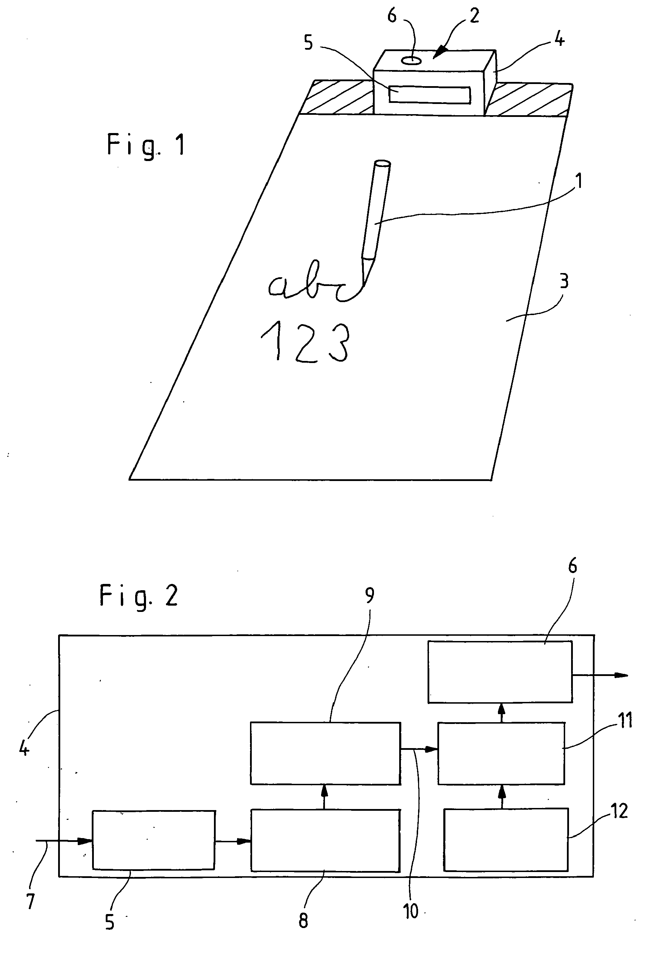

Die erfindungsgemäße Vorrichtung umfasst ein Schreibgerät 1 mit Sender sowie einen Empfänger 2. Das Schreibgerät 1 kann in gewohnter Weise über eine Schreibunterlage 3 geführt werden. Die Schreibunterlage 3 kann dabei ein Blatt Papier sein. Der Empfänger 2 ist der Schreibunterlage 3 zugeordnet, wie in Fig. 1 dargestellt, kann er an einer oberen kürzeren Seite der Schreibunterlage 3 angeordnet sein.

Der Empfänger 2 weist ein Gehäuse 4 auf. In das Gehäuse 4 ist ein Sensor 5 eingesetzt, welcher in Richtung des Schreibgerätes 1 ausgerichtet ist. Weiterhin ist in das Gehäuse 4 eine Anzeige 6 zur Ausgabe eines Signals angeordnet.

In Fig. 2 sind schematisch die Bauelemente des Empfängers 2 im Gehäuse 4 dargestellt. Der Sensor 5 kann vom Schreibgerät 1 ausgesendete Signale, welche mit einem Pfeil 7 dargestellt sind, aufnehmen. Die Signale werden anschließend in einer Digitalisierungseinrichtung 8 digitalisiert. In dem Empfänger 2 ist darüber hinaus eine Zeichenerkennungseinrichtung 9 aufgenommen, welche, wie mit dem Pfeil 10 gekennzeichnet, mit einer Fehlererkennungseinrichtung 11 zusammenwirkt. Mit der Fehlererkennungseinrichtung 11 ist weiterhin ein Regelspeicher 12 verknüpft. Wird ein Fehler erkannt, wird von der Fehlererkennung 11 die Anzeige 6 aktiviert, um einen erkannten Fehler kenntlich zu machen.

## Patentansprüche

1. Verfahren zum Feststellen der Richtigkeit handgeschriebener Wörter, Zahlen, Rechenaufgaben und anderer Terme in Echtzeit, während des Schreibens auf Papier oder einer ähnlichen Unterlage,
**dadurch gekennzeichnet,**
**dass** ein Schreibgerät (1) verwendet wird, dessen Bewegungen über die Schreibunterlage (3) aufgenommen werden, dass anschließend die aufgenommenen Bewegungen in einer Datenverarbeitungsanlage in Wörter, Zahlen, Rechenaufgaben und andere Terme umgesetzt werden, mit in der Datenverarbeitungsanlage abgelegten Mustern verglichen werden und bei Abweichungen ein Signal generiert wird.

2. Verfahren nach Anspruch 1, **dadurch gekennzeichnet, dass** die Schreibunterlage als X-Y-Koordinatensystem angesehen wird und Bewegungen des Stiftes in X- und Y-Richtungen ausgemessen werden.

3. Vorrichtung zum Feststellen der Richtigkeit handgeschriebener Wörter, Zahlen, Rechenaufgaben und anderer Therme in Echtzeit, während des Schreibens auf Papier oder einer ähnlichen Unterlagen, vorzugsweise zur Durchführung des Verfahrens nach Anspruch 1 oder 2, umfassend wenigstens ein Schreibgerät,
**dadurch gekennzeichnet,**
**dass** in das Schreibgerät (1) ein Sender eingesetzt ist und dass weiterhin ein Empfänger (2) vorgesehen ist, welcher Signale des Senders (1) aufnimmt und an eine Datenverarbeitungsanlage weiterleitet.

4. Vorrichtung nach Anspruch 3, **dadurch gekennzeichnet, dass** Sender und Empfänger (2) drahtlos miteinander in Verbindung stehen.

5. Vorrichtung nach Anspruch 3 oder 4, **dadurch gekennzeichnet, dass** der Empfänger (2) eine Digitalisierungseinrichtung (8) umfasst.

6. Vorrichtung nach einem der Ansprüche 3 bis 5, **dadurch gekennzeichnet, dass** der Empfänger (2) eine Zeichenerkennung (9) aufweist, welche mit einer Fehlerkennung (11) verschaltet ist, wobei die Fehlererkennung (11) mit einem Regelspeicher (12) verknüpft ist.

7. Vorrichtung nach einem der Ansprüche 3 bis 6, **dadurch gekennzeichnet, dass** die Datenverarbeitungsanlage eine akustische und/oder optische Anzeige (6) zur Ausgabe des bei Abweichungen generierten Signals aufweist.

8. Vorrichtung nach einem der Ansprüche 3 bis 7, **dadurch gekennzeichnet, dass** die Datenverarbeitungsanlage durch eine elektronische Schaltung mit der Zeichenerkennung (9), der Fehlererkennung (11) und dem Regelspeicher (12) ausgebildet ist.

9. Vorrichtung nach einem der Ansprüche 3 bis 8, **dadurch gekennzeichnet, dass** die Datenverarbeitungsanlage in einem kompakten und mobilen Gehäuse (4) angeordnet ist.

10. Vorrichtung nach einem der Ansprüche 3 bis 9, **dadurch gekennzeichnet, dass** die Schreibbewegungen im Schreibgerät (1) selbst optisch erfassbar sind und die Datenverarbeitungsanlage sowie eine optische, akustische und/oder taktile Anzeige im Schreibgerät (1) untergebracht sind.
